(19) Europäisches Patentamt
European Patent Office
Office européen des brevets

(11) **EP 4 723 245 A1**

(12) **EUROPEAN PATENT APPLICATION**
published in accordance with Art. 153(4) EPC

(43) Date of publication:
08.04.2026 Bulletin 2026/15

(21) Application number: 24937526.2

(22) Date of filing: 28.06.2024

(51) International Patent Classification (IPC):
$H01M\ 4/62^{(2006.01)}$    $H01M\ 4/136^{(2010.01)}$
$H01M\ 10/054^{(2010.01)}$    $C01G\ 49/00^{(2006.01)}$
$H01M\ 4/58^{(2010.01)}$

(52) Cooperative Patent Classification (CPC):
Y02E 60/10

(86) International application number:
PCT/CN2024/102604

(87) International publication number:
WO 2025/227489 (06.11.2025 Gazette 2025/45)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.04.2024 CN 202410544773

(71) Applicant: Beijing Easpring Material Technology
Co., Ltd.
Beijing 100160 (CN)

(72) Inventors:
• WANG, Ziheng
  Beijing 100160 (CN)
• LIU, Yafei
  Beijing 100160 (CN)
• CHEN, Yanbin
  Beijing 100160 (CN)

(74) Representative: Nederlandsch Octrooibureau
P.O. Box 29720
2502 LS The Hague (NL)

(54) **POSITIVE ELECTRODE ACTIVE MATERIAL AND PREPARATION METHOD THEREFOR, POSITIVE ELECTRODE SHEET, BATTERY, AND ELECTRIC DEVICE**

(57)    The present disclosure relates to the technical field of sodium-ion batteries, and particularly, to a cathode active material, a preparation method therefor, a cathode plate, a battery, and an electric device. The cathode active material is an iron-based sulfate cathode material for the sodium-ion battery. An X-ray diffraction pattern of the cathode active material has a first characteristic peak in a range from 34.9° to 35.3° and a second characteristic peak in a range from 35.3° to 35.5°. A peak intensity $I_1$ of the first characteristic peak and a peak intensity $I_2$ of the second characteristic peak satisfy: $1.1 \le I_1/I_2 \le 1.5$. When a ration of the peak intensity of the first characteristic peak to the peak intensity of the second characteristic peak in the X-ray diffraction pattern of the cathode active material satisfies the above condition, it indicates that Fe in the cathode active material exists mainly in the form of $Fe^{2+}$ and that a mass percentage of $Fe^{3+}$ in the material is smaller than 1.5%. A main existing form of $Fe^{3+}$ is a $Fe_3O_4$ impurity phase, which reduces reaction activity of the cathode material.

EP 4 723 245 A1

Description

**CROSS-REFERENCE TO RELATED APPLICATIONS**

This application claims priority to and benefits of Chinese Patent Applications No. 202410544773.X, filed on April 30, 2024, the entire disclosure of which is incorporated herein by reference.

FIELD

The present disclosure relates to the technical field of sodium-ion batteries, and in particular, to a cathode active material, a preparation method therefor, a cathode plate, a battery, and an electric device.

**BACKGROUND**

Lithium-ion batteries are currently widely used in electric vehicles and electronic products such as laptops and mobile phones, and their connection with human production and daily life is becoming increasingly close. However, with a price fluctuation of lithium resources, low-cost sodium-ion batteries with a similar operating mechanism of the lithium-ion batteries have gradually attracted widespread attention, and are expected to partially replace lithium-ion batteries in the fields of low-speed electric vehicles and energy storage, making an important contribution to further expansion of battery market scale.

Similar to a lithium iron phosphate cathode material in the lithium-ion battery, a polyanionic material among various cathode materials for the sodium-ion battery exhibits low costs and the best cycling performance. In particular, for a carbon-composited sodium iron sulfate material ($Na_{2+2x}Fe_{2-x}(SO_4)_3$@C), the main raw material thereof has low costs, and a sintering energy consumption thereof is low, and a discharge voltage platform thereof is high, having a promising application prospect.

However, this type of material has poor thermal stability. Even when subjected to low-temperature sintering under the protection of an inert atmosphere, this material is still prone to forming impurities such as $Fe_3O_4$ or $Fe_2O_3$ containing $Fe^{3+}$. For example, in the literature published by Li et al. (J. Mater. Chem. A, 2019, 7, 14656-14669, DOI: 10.1039/c9ta03089a), a $Na_6Fe_5(SO_4)_8$@CNTs material with a relatively-high initial discharge specific capacity and a relatively high discharge voltage was prepared via solid-phase mixing and low-temperature sintering processes. Nevertheless, tests showed that more than 20% of $Fe^{2+}$ was oxidized to $Fe^{3+}$, which seriously impaired cycling performance of the material.

To prevent oxidation of $Fe^{2+}$, in the prior art, elemental metal powder (such as Fe) is added during a ball milling and mixing process to provide reductive protection for $Fe^{2+}$. However, such a processing also increases a risk of magnetic foreign matter and impurities introduced into the product. In addition, in the prior art, $Fe^{2+}$ may also protected by adding an organic antioxidant (such as ascorbic acid) to solutions of $Na_2SO_4$ and $FeSO_4 \cdot nH_2O$ before preparing a precursor. However, such an organic material is prone to decomposition when heated, and thus its antioxidant effect can be hardly maintained during subsequent sintering. Moreover, the low-temperature sintering is disadvantageous for effective carbonization of the organic material, and the organic material remains as an impurity, exerting an adverse effect on the material's performance. Therefore, it is urgent to provide a new preparation method that can not only solve an oxidation problem of $Fe^{2+}$ in the sodium-iron-sulfate-based carbon composite material but also reduce introduction of impurities.

**SUMMARY**

The present disclosure aims to solve at least one of the technical problems in the related art to some extent. To this end, an objective of the present disclosure is to provide a cathode active material and a preparation method therefor, which are intended to solve an oxidation problem of $Fe^{2+}$ in a sodium-iron-sulfate-based carbon composite material, while reducing introduction of impurities and improving a specific capacity and cycling stability of the material.

To this end, a first aspect of the present disclosure provides a cathode active material. According to an embodiment of the present disclosure, the cathode active material is an iron-based sulfate cathode material for a sodium-ion battery. An X-ray diffraction pattern of the cathode active material has a first characteristic peak in a range from 34.9° to 35.3° and a second characteristic peak in a range from 35.3° to 35.5°. A peak intensity $I_1$ of the first characteristic peak and a peak intensity $I_2$ of the second characteristic peak satisfy: $1.1 \leq I_1/I_2 \leq 1.5$.

The aforementioned first characteristic peak belongs to a (-132) crystal plane of the cathode active material. The second characteristic peak is a composite characteristic peak, which is formed by overlapping of a characteristic peak of a (112) crystal plane and the strongest characteristic peak of a (311) crystal plane of $Fe_3O_4$ at 35.4°, where $Fe_3O_4$ is generated by a side reaction of decomposition of $FeSO_4$. Therefore, a higher relative peak intensity of the second characteristic peak indicates a more intensive side reaction occurring during the preparation of the cathode active material and more impurities, and a reduction in available $Fe^{2+}/Fe^{3+}$ redox couple in turn results in a reduction in the specific capacity and cycling performance of the cathode active material. When a ratio of the peak intensity of the first characteristic peak to the peak intensity of the second characteristic peak in the X-ray diffraction pattern (XRD) pattern of the cathode active material satisfies the above condition, it indicates that Fe in the cathode active material mainly exits in the form of $Fe^{2+}$ and that a mass percentage of $Fe^{3+}$ in the material is smaller than 1.5%, which significantly reduces a content of $Fe^{3+}$ mainly in the form of a $Fe_3O_4$ impurity phase in the cathode active material, thereby improving the reaction activity of the cathode active material.

According to an embodiment of the present disclosure, for the cathode active material that has been left to stand for 24 hours in an open environment at a temperature of 25°C and a relative humidity of 30%, a peak intensity $I_1'$ of the first characteristic peak and a peak intensity $I_2$ of the second characteristic peak satisfy: $1.05 \leq I_1'/I_2 \leq 1.4$; and

$$0 \leq \Delta I_1/I_2 = \frac{I_1/I_2 - I_{1'}/I_{2'}}{I_1/I_2} \leq 6\%$$ .

Therefore, it indicates that during storage, the cathode active material can also prevent oxidation of $Fe^{2+}$ and maintain the content of $Fe^{3+}$ basically unchanged, thereby having good structural stability.

According to an embodiment of the present disclosure, the peak intensity $I_1$ of the first characteristic peak and the peak intensity $I_2$ of the second characteristic peak satisfy: $1.2 \leq I_1/I_2 \leq 1.4$. Therefore, it indicates that Fe in the cathode active material exits mainly in the form of $Fe^{2+}$ and a mass proportion of $Fe^{3+}$ in the material is lower.

According to an embodiment of the present disclosure, $1.1 \leq I_1'/I_2' \leq 1.25$; and

$$0 \leq \Delta I_1/I_2 = \frac{I_1/I_2 - I_{1'}/I_{2'}}{I_1/I_2} \leq 4\%$$ .

The cathode active material satisfying the above conditions is more conducive to the storage and has good structural stability.

According to an embodiment of the present disclosure, the cathode active material satisfies at least one of the following conditions: $D_{50}$ of the cathode active material ranges from 4 $\mu$m to 10 $\mu$m; $D_{100}$ of the cathode active material satisfies: 6 $\mu$m$<D_{100}<$20 $\mu$m; or a specific surface area of the cathode active material ranges from 5 $m^2/g$ to 25 $m^2/g$.

According to an embodiment of the present disclosure, the cathode active material has a chemical formula represented by formula (1): $Na_{2x}Fe_{2-y}M_y(SO_4)_{(2+x-z)}(SO_3)_z@C$ (1), where $1 \leq x \leq 2.04$, and preferably $1 \leq x \leq 1.4$; $0 \leq y \leq 0.2$; $0 < z \leq 0.04$, and preferably $0 < z \leq 0.03$; and M is selected from at least one of Mn, Co, Ni, Mg, Cu, or Zn.

In this way, through element doping, a crystal structure of the cathode active material is improved, thermal stability of the material is enhanced, and a side reaction that the cathode active material decomposes to generate $Fe_3O_4$ or $Fe_2O_3$ impurities is inhibited. Meanwhile, a structural formula of the material contains $SO_3^{2-}$, which can also ensure the protection of $Fe^{2+}$ in the material during the storage of the material and improve air stability of the material structure. The doping of transition metal elements and the presence of $SO_3^{2-}$ result in an extremely low content of $Fe^{3+}$ in the cathode active material, and the material exhibits a high specific capacity, good cycling stability, and storage performance.

A second aspect of the present disclosure provides a preparation method for a cathode active material. The preparation method includes: step 1 of preparing a reducing agent solution and mixing an inorganic conductive carbon material with the reducing agent solution to obtain a mixed solution 1; step 2 of mixing $Na_2SO_4$, $FeSO_4 \cdot 7H_2O$, and optional sulfate with the mixed solution 1 to obtain a mixed solution 2; step 3 of performing spray drying on the mixed solution 2 to obtain a cathode active material precursor; and step 4 of sintering the cathode active material precursor to obtain the cathode active material. A reducing agent in the reducing agent solution is $NaHSO_3$ and/or $Na_2S_2O_5$. The sulfate is used to provide element M. The element M is selected from at least one of Mn, Co, Ni, Mg, Cu, or Zn.

The present disclosure provides a method based on a synergistic effect of element doping and an inorganic reducing agent, for improving the thermal stability of the cathode active material and effectively protecting $Fe^{2+}$. In the method according to the present disclosure, the element doping solves a problem that a crystal structure of a sodium iron sulfate-based material is prone to decomposition when subjected to heating, thereby effectively reducing the impurities. The introduction of the inorganic reducing agent protects $Fe^{2+}$ for a long period of time period from the synthesis to the storage, improving the specific capacity and the stability of the material. The synergistic effect of these two means is of great significance for production of a high-quality polyanionic cathode active material for a sodium-ion battery.

According to an embodiment of the present disclosure, in step 1, a mass of a solvent in the reducing agent solution is 2 to 3 times a mass of $FeSO_4 \cdot 7H_2O$ added in step 2.

According to an embodiment of the present disclosure, in step 1, the inorganic conductive carbon material includes at least one of graphene, reduced graphene oxide, conductive graphite, acetylene black, Ketjen black, mesoporous carbon, or carbon nanotubes.

According to an embodiment of the present disclosure, in step 2, a molar ratio of $Na_2SO_4$, $FeSO_4 \cdot 7H_2O$, and the sulfate is $\delta$:2-y:y, where $0.96 \leq \delta \leq 2$; and $0 \leq y \leq 0.2$.

According to an embodiment of the present disclosure, a molar ratio of sodium element in the reducing agent to $Na_2SO_4$ is 2n:$\delta$, where $0 < n \leq 0.04$.

According to an embodiment of the present disclosure, in step 2, a mass ratio of a total mass of $Na_2SO_4$, $FeSO_4 \cdot 7H_2O$, and the sulfate that are completely dehydrated to a mass of the inorganic conductive carbon material is 100:(0.5 to 10).

According to an embodiment of the present disclosure, in step 3, conditions of the spray drying include: an inlet air temperature ranging from 130°C to 160°C, and an outlet air temperature greater than or equal to 80°C.

According to an embodiment of the present disclosure, in step 3, $D_{50}$ of the cathode active material precursor ranges from 4 $\mu$m to 10 $\mu$m; and $D_{100}$ of the cathode active material precursor satisfies: 6 $\mu$m$<D_{100}<$20 $\mu$m.

According to an embodiment of the present disclosure, in step 4, said sintering is performed at 300°C to 380°C for 8 hours to 20 hours.

A third aspect of the present disclosure provides a cathode plate. The cathode plate includes the cathode active material described in the first aspect or the cathode active material prepared by the preparation method described in the second aspect.

A fourth aspect of the present disclosure provides a battery. The battery includes the cathode plate described in the third aspect.

A fifth aspect of the present disclosure provides an electric device. The electric device includes the battery described in the fourth aspect.

Additional aspects and advantages of the present disclosure will be provided in part in the following description, or will become apparent in part from the following description, or can be learned from practicing of the present disclosure.

## BRIEF DESCRIPTION OF THE DRAWINGS

The above and/or additional aspects and advantages of the present disclosure will become more apparent and more understandable from the following description of embodiments taken in conjunction with the accompanying drawings, in which:

FIG. 1 is a scanning electron microscope (SEM) image of a spray-dried precursor obtained in Example 1 of the present disclosure;

FIG. 2 is an SEM image of a cathode active material obtained in Example 1 of the present disclosure;

FIG. 3 is a diagram for the comparison between an X-ray diffraction (XRD) pattern of the cathode active material obtained in Example 1 of the present disclosure and a standard pattern of a crystal structure of a sodium iron sulfate-based material, in which the standard pattern is sourced from the literature with DOI: 10.1039/C9TA00116F (J. Mater. Chem. A, 2019, 7, 8226-8233);

FIG. 4 is a diagram for the comparison between an XRD pattern of the cathode active material obtained in Example 1 of the present disclosure that has been left to stand for 24 hours in an open system and a standard pattern of a crystal structure of a sodium iron sulfate-based material, in which the standard pattern is sourced from the literature with DOI: 10.1039/C9TA00116F (J. Mater. Chem. A, 2019, 7, 8226-8233);

FIG. 5 illustrates a constant current charge-discharge curve at 0.1C of a sodium-ion battery prepared based on the cathode active material in Example 1 of the present disclosure;

FIG. 6 illustrates a cycling curve at 1C of the sodium-ion battery prepared based on the cathode active material in Example 1 of the present disclosure;

FIG. 7 is an SEM image of a cathode active material obtained in Example 7 of the present disclosure;

FIG. 8 illustrates a gelation phenomenon occurring during preparation of a cathode slurry in Example 7 of the present disclosure;

FIG. 9 is an XRD pattern of a cathode active material obtained in Comparative Example 2 of the present disclosure;

FIG. 10 is an XRD pattern of the cathode active material obtained in Comparative Example 2 after being left to stand for 24 hours in an open system; and

FIG. 11 is an XRD pattern of a cathode active material obtained in Comparative Example 4.

## DETAILED DESCRIPTION

The embodiments of the present disclosure will be described in detail below. The embodiments described below are illustrative only, and are intended to explain, rather than limiting, the present disclosure.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality of" means at least two, such as two, three, etc., unless otherwise specifically defined.

A "range" disclosed in the present disclosure is defined by a lower limit and an upper limit, and a given range is defined by selecting one lower limit and one upper limit, which define the boundaries of the particular range. A range defined in this manner may include end values or not, and may be arbitrarily combined, i.e., a range may be defined by any selected lower limit and any selected upper limit. For example, if a range of 60 to 120 and a range of 80 to 110 are listed for a specific parameter, it is understood that a range of 60 to 110 and a range of 80 to 120 are also expected for this parameter. In addition, if the minimum range end values 1 and 2 as well as the maximum range end values 3, 4 and 5 are listed, the following ranges are all expected: 1 to 3, 1 to 4, 1 to 5, 2 to 3, 2 to 4, and 2 to 5. In the present disclosure, unless otherwise specified, the value range "a to b" represents an abbreviated representation of any combination of real numbers between a and b, where both a and b are real numbers. For example, the value range "0 to 5" represents that all real numbers between "0 and 5" have been listed herein, and "0 to 5" only represents an abbreviated representation of combinations of these values. In addition, when a parameter is expressed as an integer greater than or equal to 2, it is equivalent to disclosing that the parameter is an integer, such as 2, 3, 4, 5, 6, 7, 8, 9, 10, 11, or 12.

Unless otherwise specified, all embodiments and optional embodiments of the present disclosure may be combined with each other to form new technical solutions.

Unless otherwise specified, all technical features and optional technical features of the present disclosure may be combined with each other to form new technical solutions.

Unless otherwise specified, all steps of the present disclosure may be performed sequentially or randomly, and preferably sequentially. For example, the method includes steps (a) and (b), meaning that the method may include steps (a) and (b) that are performed sequentially, or may include steps (b) and (a) that are performed sequentially. For example, the reference to the method may further include step (c), meaning that step (c) may be added to the method in any order. For example, the method may include steps (a), (b), and (c), or may further include steps (a), (c), and (b), or may further include steps (c), (a), and (b), or the like.

A first aspect of the present disclosure provides a cathode active material. The cathode active material is an iron-based sulfate cathode material for a sodium-ion battery. An X-ray diffraction pattern of the cathode active material has a first characteristic peak in a range from 34.9° to 35.3° and a second characteristic peak in a range from 35.3° to 35.5°. A peak intensity $I_1$ of the first characteristic peak and a peak intensity $I_2$ of the second characteristic peak satisfy: $1.1 \leq I_1/I_2 \leq 1.5$.

In the prior art, regarding the problem that the cathode active material has poor thermal stability and tends to form $Fe_3O_4$ or $Fe_2O_3$ impurities containing $Fe^{3+}$, elemental metal powders (such as Fe) are often added during preparation of the cathode active material to perform reductive protection for $Fe^{2+}$. However, such a solution also increases a risk of magnetic foreign matter and impurities contained in the product. In addition, an organic antioxidant may also be added during the preparation, but the organic antioxidant is prone to decomposition and thus can hardly maintain its antioxidant effect in subsequent calcination. Meanwhile, the low-temperature sintering is adverse to effective carbonization of the organic antioxidant. The organic antioxidant, as an impurity, has a detrimental effect on the performance of the material. It is found in the present disclosure that when a ratio of the peak intensity of the first characteristic peak to the peak intensity of the second characteristic peak in the X-ray diffraction pattern (XRD pattern) of the cathode active material satisfies the above conditions, it indicates that Fe in the cathode active material exits mainly in the form of $Fe^{2+}$, and that a mass percentage of $Fe^{3+}$ in the material is smaller than 1.5%, which significantly reduces a content of $Fe^{3+}$ mainly in the form of a $Fe_3O_4$ impurity phase in the cathode active material, thereby improving the reaction activity of the cathode active material. The first characteristic peak belongs to a (-132) crystal plane of the cathode active material, and the second characteristic peak is a composite characteristic peak, which is formed by overlapping of a characteristic peak of a (112) crystal plane and the strongest characteristic peak of a (311) crystal plane of $Fe_3O_4$ at 35.4°, where $Fe_3O_4$ contains $Fe^{3+}$ and is generated from a side reaction of decomposition of $FeSO_4$. Therefore, a higher relative peak intensity of the second characteristic peak indicates a more intensive side reaction occurring during the preparation of the cathode active material and more impurities, and a reduction in available $Fe^{2+}/Fe^{3+}$ redox couple in turn results in a reduction in a specific capacity and cycling performance of the cathode active material.

According to a specific embodiment of the present disclosure, for the cathode active material that has been left to stand for 24 hours in an open environment at a temperature of 25°C and a relative humidity of 30%, a peak intensity $I_{1'}$ of the first characteristic peak and a peak intensity $I_{2'}$ of the second characteristic peak satisfy: $1.05 \leq I_{1'}/I_{2'} \leq 1.4$; and

$$0 \leq \Delta I_1/I_2 = \frac{I_1/I_2 - I_{1'}/I_{2'}}{I_1/I_2} \leq 6\%$$

.

**EP 4 723 245 A1**

When the cathode active material satisfies the above conditions, it indicates that the material can also be protected by a reducing agent during the storage thereof and can maintain the content of $Fe^{3+}$ basically unchanged, having good structural stability.

According to a specific embodiment of the present disclosure, the peak intensity $I_1$ of the first characteristic peak and the peak intensity $I_2$ of the second characteristic peak satisfy: $1.2 \leq I_1/I_2 \leq 1.4$. Therefore, it indicates that Fe in the cathode active material exits mainly in the form of $Fe^{2+}$ and a mass proportion of $Fe^{3+}$ in the material is lower.

According to a specific embodiment of the present disclosure, $1.1 \leq I_1'/I_2' \leq 1.25$; and

$$0 \leq \Delta I_1/I_2 = \frac{I_1/I_2 - I_1'/I_2'}{I_1/I_2} \leq 4\%$$

.

The cathode active material satisfying the above conditions is more conducive to the storage and has good structural stability.

The above-mentioned relative humidity is defined as a percentage d1 of a water vapor density actually contained in a unit volume of air to a saturated water vapor density (denoted by d2) at the same temperature, i.e., RH(%) =d1/d2×100%. Another method for calculating the relative humidity is to use a percentage of an actual air water vapor pressure (denoted by p1) to a saturated water vapor pressure (denoted by p2) at one temperature, i.e., RH(%) =p1/p2×100%.

According to a specific embodiment of the present disclosure, the cathode active material satisfies at least one of the following conditions: $D_{50}$ of the cathode active material ranges from 4 $\mu$m to 10 $\mu$m; $D_{100}$ of the cathode active material satisfies: 6 $\mu$m<$D_{100}$<20 $\mu$m; or a specific surface area of the cathode active material ranges from 5 $m^2$/g to 25 $m^2$/g.

The cathode active material is not particularly limited in morphology, and preferably, the cathode active material is regularly-shaped spherical particles. A particle size of the cathode active material is preferably in a small particle size range, and the $D_{50}$ of the cathode active material preferably ranges from 4 $\mu$m to 10 $\mu$m. As specific examples, the $D_{50}$ is 4 $\mu$m, 5 $\mu$m, 6 $\mu$m, 7 $\mu$m, 8 $\mu$m, 9 $\mu$m, 10 $\mu$m, etc. Producing particles with regular morphology will affect electrochemical performance of the material because a particle size of a precursor is inherited by the cathode material. Therefore, it is necessary to control the $D_{50}$ of the cathode active material to range from 4 $\mu$m to 10 $\mu$m to achieve good electrical performance, which can be specifically realized by adjusting a spray drying parameter during the preparation. The $D_{100}$ of the cathode active material preferably satisfies: 6 $\mu$m<$D_{100}$<20 $\mu$m. As specific examples, the $D_{100}$ is 19 $\mu$m, 18 $\mu$m, 17 $\mu$m, 16 $\mu$m, etc.

Preferably, the specific surface area of the cathode active material ranges from 5 $m^2$/g to 25 $m^2$/g, As specific examples, the specific surface area is 5 $m^2$/g, 6 $m^2$/g, 7 $m^2$/g, 8 $m^2$/g, 9 $m^2$/g, 10 $m^2$/g, 11 $m^2$/g, 12 $m^2$/g, 13 $m^2$/g, 14 $m^2$/g, 15 $m^2$/g, 16 $m^2$/g, 17 $m^2$/g, 18 $m^2$/g, 19 $m^2$/g, 20 $m^2$/g, 21 $m^2$/g, 22 $m^2$/g, 23 $m^2$/g, 24 $m^2$/g, 25 $m^2$/g, etc. When the specific surface area of the cathode active material ranges from 5 $m^2$/g to 25 $m^2$/g, the adverse gelation phenomenon, which is attributed to a water-absorbing property of the sodium iron sulfate-based material, is less likely to occur during preparation of a cathode slurry.

According to a specific embodiment of the present disclosure, the cathode active material has a chemical formula represented by formula (1): $Na_{2x}Fe_{2-y}M_y(SO_4)_{(2+x-z)}(SO_3)_z@C$ (1), where $1 \leq x \leq 2.04$, $0 \leq y \leq 0.2$, $0 < z \leq 0.04$, and M is selected from at least one of Mn, Co, Ni, Mg, Cu, or Zn.

Chemical compositions of the cathode active material include doping elements M and $SO_3^{2-}$. The doping element can improve a crystal structure of the material, enhance the thermal stability of the material, and inhibit a side reaction where the sodium iron sulfate-based material decomposes itself to generate $Fe_3O_4$ or $Fe_2O_3$ impurities. $SO_3^{2-}$ is derived from an inorganic reducing agent added during the preparation. During the preparation or material storage, when oxygen is present in the system, $SO_3^{2-}$ reacts preferentially over $Fe^{2+}$ and is converted into $SO_4^{2-}$. Therefore, through a synergistic effect of transition metal element doping and $SO_3^{2-}$ protection, the synthesized sodium-iron-sulfate-based carbon composite cathode material for the sodium-ion battery has an extremely low content of $Fe^{3+}$ and exhibits a high specific capacity, good cycling stability, and storage performance.

In the chemical formula, the closer x is to 1, the higher a proportion of $Na^+$ participating in an electrochemical reaction process of intercalation/deintercalation, and the higher a theoretical specific capacity of the material. Specifically, $1 \leq x \leq 2.04$. As specific examples, x may be 1, 1.1, 1.2, 1.3, 1.4, 1.5, 1.6, 1.7, 1.8, 1.9, 2.0, 2.04, or the like, and preferably $1 \leq x \leq 1.4$.

In the chemical formula, y corresponds to a doping amount of the doping element. The doping element may improve the structural stability of the material but has no significant effect on increasing a capacity of the material. Therefore, a lower doping amount is preferred, with $0 \leq y \leq 0.2$. As specific examples, y may be 0, 0.1, 0.2, etc. The doping element M includes, but is not limited to, Mn, Co, Ni, Mg, Cu, or Zn.

In the chemical formula, z corresponds to a residual amount of the reducing agent in the prepared cathode active material, and the reducing agent is only added in a trace amount during the preparation. Therefore, z satisfies $0 < z \leq 0.04$. As

specific examples, z may be 0, 0.01, 0.02, 0.03, 0.04, or the like, and preferably $0<z\leq0.03$. The reducing agent may be $NaHSO_3$ and/or $Na_2S_2O_5$. During a sintering process, $NaHSO_3$ or $Na_2S_2O_5$ is first converted into $Na_2SO_3$ during the temperature-rise process. Since $\varphi(SO_3^{2-}/SO_4^{2-})=-0.93V$ is smaller than $\varphi(Fe^{2+}/Fe^{3+})=-0.77V$, $Na_2SO_3$, as the stronger reducing agent, reacts preferentially over $Fe^{2+}$ in the presence of a trace amount of oxygen, and is converted into a raw material of $Na_2SO_4$, which continues to participate in a solid-phase reaction with $FeSO_4$ in the subsequent sintering without causing other affects. If a sintering atmosphere has an extremely low oxygen content, $Na_2SO_3$ will not be oxidized during the sintering and may also protect $Fe^{2+}$ for a long period of time during the material storage, improving air stability of the material structure. Therefore, to some extent, the chemical formula of the cathode active material will change over storage time, i.e., z tends to decrease until it reaches zero.

Meanwhile, it can be known from the chemical formula that a surface of the cathode active material is coated with a carbon material. The carbon material includes, but is not limited to, graphene, reduced graphene oxide, conductive graphite, acetylene black, Ketjen black, mesoporous carbon, and carbon nanotubes. A mass fraction of the carbon material in the cathode active material ranges from 0.5% to 10%. As specific examples, the mass fraction of the carbon material in the cathode active material may be 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, etc. A type of conductive carbon chosen for addition has a significant affect on the specific surface area of the material. However, an upper limit of the specific surface area may be controlled by adjusting parameters during the preparation to produce a spray-dried precursor with regular morphology.

A second aspect of the present disclosure provides a preparation method for a cathode active material. The method includes the following steps.

At step 1, a reducing agent solution is prepared, and an inorganic conductive carbon material is mixed with the reducing agent solution to obtain a mixed solution 1.

According to a specific embodiment of the present disclosure, the reducing agent solution in the reducing agent solution is preferably $NaHSO_3$ and/or $Na_2S_2O_5$. Meanwhile, the reducing agent solution is preferably an acidic solution, i.e., the reducing agent is in an acidic environment during solution preparation, which can effectively inhibit oxidation of $Fe^{2+}$ or the occurrence of its hydrolysis reaction, and maintain stability of $Fe^{2+}$ during subsequent batching and spray drying.

According to a specific embodiment of the present disclosure, the specific type of the inorganic conductive carbon material is not particularly limited, which can be selected by those skilled in the art based on the actual need. For example, the inorganic conductive carbon material may include at least one of graphene, reduced graphene oxide, conductive graphite, acetylene black, Ketjen black, mesoporous carbon, or carbon nanotubes.

Specifically, step 1 may be performed as follows. A small amount of inorganic reducing agent is weighed and added to an appropriate amount of deionized water, followed by rapid stirring until completely dissolved, resulting in a uniform acidic aqueous solution protected by the reducing agent.

A certain amount of one or more inorganic conductive carbon materials is weighed and added to the above-mentioned acidic aqueous solution containing the reducing agent. Through continuous stirring and ultrasonic dispersion processes, a mixed solution 1 with uniformly distributed carbon particles is obtained.

At step 2, $Na_2SO_4$, $FeSO_4 \cdot 7H_2O$, and optional sulfate are mixed with the mixed solution 1 to obtain a mixed solution 2.

According to a specific embodiment of the present disclosure, the sulfate is used to provide element M. The element M is selected from at least one of Mn, Co, Ni, Mg, Cu, or Zn. That is, the sulfate includes, but is not limited to, $MnSO_4$, $CoSO_4$, $NiSO_4$, $MgSO_4$, $CuSO_4$, $ZnSO_4$, and crystalline hydrates thereof.

According to a specific embodiment of the present disclosure, in step 1, a mass of a solvent in the reducing agent solution is 2 to 3 times a mass of $FeSO_4 \cdot 7H_2O$ added in step 2. The solvent includes, but is not limited to, deionized water. Solubility of $FeSO_4 \cdot 7H_2O$ in water at a room temperature is greater than 50 g. Although adding more water is beneficial for solute dispersion and an increase in a dissolution rate, it will cause a reduction in spray drying efficiency and an increase in production costs due to water consumption.

According to a specific embodiment of the present disclosure, in step 2, a molar ratio of $Na_2SO_4$, $FeSO_4 \cdot 7H_2O$, and the sulfate is $\delta:2-y:y$, where $0.96\leq\delta\leq2$; and $0\leq y\leq0.2$. As specific examples, $\delta$ may be 0.96, 1, 1.5, 2, etc. As specific examples, y may be 0, 0.1, 0.2, etc.

According to a specific embodiment of the present disclosure, a molar ratio of sodium element in the reducing agent to $Na_2SO_4$ is $2n:\delta$, where $0<n\leq0.04$. As specific examples, n is 0.01, 0.02, 0.03, 0.04, etc.

According to a specific embodiment of the present disclosure, a mass ratio of a total mass of $Na_2SO_4$, $FeSO_4 \cdot 7H_2O$, and the sulfate that are completely dehydrated to a mass of the inorganic conductive carbon material is 100:(0.5 to 10). As specific examples, the mass ratio is 100:0.5, 100:1, 100:1.5, 100:2, 100:2.5, 100:3, 100:3.5, 100:4, 100:4.5, 100:5, 100:5.5, 100:6, 100:6.5, 100:7, 100:7.5, 100:8, 100:8.5, 100:9, 100:9.5, 100:10, etc. Since intrinsic electronic conductivity of the sodium iron sulfate-based material is lower than intrinsic electronic conductivity of other types of cathode materials for the sodium-ion battery, and inhibiting the side reaction of $FeSO_4$ also consumes a small amount of carbon, it is necessary to add more conductive carbon during the solution preparation.

In some embodiments, step 2 may be performed as follows. An appropriate proportion of anhydrous $Na_2SO_4$, $FeSO_4 \cdot 7H_2O$, and at least one M sulfate is weighed and added to the above-mentioned mixed solution 1, followed by rapid stirring for a long period of time until all raw materials in the solution are completely dissolved, resulting in a mixed solution 2 to be spray-dried.

At step 3, spray drying is performed on the mixed solution 2 to obtain a cathode active material precursor.

According to a specific embodiment of the present disclosure, conditions of the spray drying include the following.

An inlet air temperature ranges from 130°C to 160°C. As specific examples, the inlet air temperature is 130°C, 140°C, 150°C, 160°C, etc. The inlet air temperature lower than 160°C can suppress rapid thermal dehydration of $FeSO_4$ in air and the conversion of $FeSO_4$ to $Fe(OH)SO_4$. An outlet air temperature is greater than or equal to 80°C, and as specific examples, the outlet air temperature is 80°C, 90°C, 100°C, 105°C, etc., which is beneficial for moisture removal to reach a predetermined degree of dryness.

According to a specific embodiment of the present disclosure, the cathode active material precursor has a morphology of regular spherical particles, with a median particle size $D_{50}$ ranging from 4 $\mu$m to 10 $\mu$m. As specific examples, the $D_{50}$ is 4 $\mu$m, 5 $\mu$m, 6 $\mu$m, 7 $\mu$m, 8 $\mu$m, 9 $\mu$m, 10 $\mu$m, etc. The maximum particle size $D_{100}$ satisfies: 6 $\mu$m$<D_{100}<20$ $\mu$m. As specific examples, the $D_{100}$ is 19 $\mu$m, 18 $\mu$m, 17 $\mu$m, 16 $\mu$m, 15 $\mu$m, 14 $\mu$m, 13 $\mu$m, 12 $\mu$m, 11 $\mu$m, 10 $\mu$m, 9 $\mu$m, 8 $\mu$m, 7 $\mu$m, etc. A particle size of the precursor is basically the same as a particle size of the cathode active material obtained after sintering.

In some embodiments, step 3 may be performed as follows. The above-mentioned mixed solution is subjected to a spray drying process under set parameters while being continuously stirred. After the spray drying is completed, the spray-dried precursor is directly collected.

At step 4, the cathode active material precursor is sintered to obtain the cathode active material.

During the sintering, $NaHSO_3$ or $Na_2S_2O_5$ is first converted into $Na_2SO_3$ during a temperature-rise process, and a portion of $SO_2$ is generated in this process. Since $\varphi(SO_3^{2-}/SO_4^{2-})=-0.93V$ is smaller than $\varphi(Fe^{2+}/Fe^{3+})=-0.77V$, $Na_2SO_3$, as the stronger reducing agent, reacts preferentially over $Fe^{2+}$ in the presence of a trace amount of oxygen, and is converted into a raw material of $Na_2SO_4$, which continues to participate in the solid-phase reaction with $FeSO_4$ in the subsequent sintering without causing other affects. If the sintering atmosphere has an extremely low oxygen content, $Na_2SO_3$ will not be oxidized during the sintering and may also protect $Fe^{2+}$ for a long period of time during the material storage, improving the air stability of the material structure.

According to a specific embodiment of the present disclosure, the sintering process is a process where the precursor completely removes crystal water and undergoes a solid-phase reaction. The sintering condition affects a residual water content, a crystallization strength, and an impurity content of the material. Said sintering may be performed at 300°C to 380°C for 8 hours to 20 hours. As specific examples, the sintering is performed at 300°C, 310°C, 320°C, 330°C, 340°C, 350°C, 360°C, 370°C, 380°C, etc., for 8 h, 9 h, 10 h, 11 h, 12 h, 13 h, 14 h, 15 h, 16 h, 17 h, 18 h, 19 h, 20 h, etc. A temperature-rise rate is not particularly limited, which can be reasonably selected by those skilled in the art based on the actual need, and the range of 1 °C/min to 3 °C/min is preferred. As specific examples, the temperature-rise rate is 1 °C/min, 1.5 °C/min, 2 °C/min, 2.5 °C/min, 3 °C/min, etc.

In some embodiments, step 4 may be performed as follows. The above-mentioned spray-dried precursor is placed in a furnace with a continuous flow of inert gas for sintering at a relatively low temperature, ultimately yielding a sodium-iron-sulfate-based carbon composite cathode material for the sodium-ion battery.

A third aspect of the present disclosure provides a cathode plate. The cathode plate includes the cathode active material described in the first aspect of the present disclosure or the cathode active material prepared by the method described in the second aspect of the present disclosure.

The cathode plate usually includes a cathode current collector and a cathode active material layer arranged on the cathode current collector. The cathode active material layer includes the cathode active material.

The cathode current collector may be a conventional metal foil or a composite current collector, which may be formed by arranging a metal material on a polymer substrate. As an example, the cathode current collector may include at least one of a copper foil, an aluminum foil, a nickel foil, a stainless steel foil, a stainless steel mesh, or a carbon-coated aluminum foil.

The cathode active material includes the cathode active material as described in the first aspect of the present disclosure or the cathode active material prepared by the method as described in the second aspect of the present disclosure.

The cathode active material layer may optionally further include a conductive agent and a binder. The conductive agent is used for improving conductivity of the cathode active material layer, and the binder is used for firmly bonding the cathode active material and the binder to the cathode current collector. A type of the conductive agent and a type of the binder may not be specifically limited in the present disclosure, and may be selected as desired.

As an example, the conductive agent may include at least one of superconducting carbon, acetylene black, carbon black, Ketjen black, carbon dots, carbon nanotubes, graphene, or carbon nanofibers. The binder may include at least one of polyvinylidene fluoride (PVDF), vinylidene fluoride copolymers, or modified derivatives thereof (such as modified with carboxylic acid, acrylic acid, acrylonitrile, or the like).

All these materials are commercially available.

A fourth aspect of the present disclosure provides a battery including the cathode plate as described in the third aspect of the present disclosure. Therefore, the battery has an excellent cycling life.

The battery refers to a battery that can be continuously used by activating an active material by means of charging after the battery is discharged.

It can be understood that the battery proposed in the present disclosure is a lithium-ion battery.

Generally, the battery includes a cathode plate, a anode plate, a separator, and an electrolyte. During charging and discharging of the battery, active ions are intercalated and deintercalated between the cathode plate and the anode plate. The separator is arranged between the cathode plate and the anode plate, playing the role of isolation. The electrolyte between the cathode plate and the anode plate serves to conduct active ions.

[Anode plate]

In the battery, the anode plate usually includes an anode current collector and an anode active material layer disposed on the anode current collector. The anode active material layer includes an anode active material.

The anode current collector is usually a structure or part capable of collecting current. The anode current collector may be various materials suitable for serving as an anode current collector of a lithium-secondary battery in the art, and may be a conventional metal foil or a composite current collector (for example, the composite current collector may be formed by arranging the metal material on the polymer substrate). As an example, the anode current collector may be a copper foil or a lithium sheet.

A specific type of the anode active material is not limited, and any active material known in the art that may be used for an anode of a battery may be adopted. Those skilled in the art may select the active material as needed. As an example, the anode active material may include, but is not limited to, a combination of one or more of graphite, soft carbon, hard carbon, carbon fiber, mesocarbon microbeads, silicon-based materials, tin-based materials, lithium titanate, or other metals that may form alloys with lithium. The graphite may be selected from a combination of one or more of artificial graphite, natural graphite, and modified graphite. The silico-based material may be selected from a combination of one or more of elemental silicon, silicon oxides, silicon-carbon composites, and silicon alloys. The tin-based material may be selected from a combination of one or more of elemental tin, tin oxides, and tin alloys. All these materials are commercially available.

In some embodiments, in order to further improve an energy density of the battery, the anode active material may include a silicon-based material.

The anode active material layer usually may further optionally include a binder, a conductive agent, and other optional additives.

As an example, the conductive agent may include one or more of superconducting carbon, acetylene black, carbon black, Ketjen black, carbon dots, carbon nanotubes, graphene, and carbon nanofibers.

As an example, the binder may include one or more of styrene-butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

As an example, other optional additives may include a thickener and a dispersant (such as sodium carboxymethyl cellulose (CMC-Na) and a PTC thermistor material.

[Electrolyte]

The electrolyte may include an electrolyte salt and a solvent.

As an example, the electrolyte salt may include one or more of sodium hexafluorophosphate (NaPF$_6$), sodium tetrafluoroborate (NaBF$_4$), sodium perchlorate (NaClO$_4$), sodium bisfluorosulfonimide (NaFSI), and sodium trifluoromethanesulfonate (NaTFS).

As an example, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), or diethyl sulfone (ESE).

In some embodiments, the electrolyte further includes an additive. For example, the additive may include an anode film-forming additive, a cathode film-forming additive, or an additive capable of improving certain properties of the battery, such as an additive for improving overcharge properties of the battery, an additive for improving high-temperature properties of the battery, an additive for improving low-temperature properties of the battery, or the like.

[Separator]

The present disclosure has no special restrictions on the aforementioned separator. Any known porous separator with electrochemical stability and mechanical stability may be selected as desired. For example, the separator may include a combination of at least one of polyethylene, polypropylene, polyvinylidene fluoride, aramid, polyethylene terephthalate, polytetrafluoroethylene, polyacrylonitrile, polyimide, polyamide, polyester, or natural fibers.

A fifth aspect of the present disclosure provides an electric device. The electric device includes the battery as described in the fourth aspect. In some embodiments, the battery may be used as a power source for the electric device and an energy storage unit for the electric device. The electric device may include, but is not limited to, a mobile equipment (such as a cell phone and a notebook computer), an electric vehicle (such as a pure electric vehicle, a hybrid electric vehicle, a plug-in hybrid electric vehicle, an electric bicycle, an electric scooter, an electric golf cart, and an electric truck), an electric train, a ship, a satellite, and an energy storage system.

The solutions of the present disclosure will be explained below in conjunction with examples. Those skilled in the art will understand that the following examples are only for illustrating the present disclosure and should not be regarded as limiting the scope of the present disclosure. The specific techniques or conditions not indicated in the Examples are implemented based on the techniques or conditions described in the related art or based on product specifications. Adopted reagents or instruments, where a manufacturer is not specified, are all conventional products commercially available.

**Example 1**

[Preparation of $Na_{2.04}Fe_{1.9}Mg_{0.1}(SO_4)_{3.02-z}(SO_3)_z@C$]

$NaHSO_3$ was added as the inorganic reducing agent, and graphene nanosheets were selected as the conductive carbon. Detailed preparation processes are described as follows.

Step 1: 0.04 mol of the reducing agent $NaHSO_3$ was weighed and added to 1,200 mL of deionized water. After rapid stirring, the reducing agent $NaHSO_3$ was completely dissolved, forming an acidic solution with reducibility.

Step 2: 20 g of graphene nanosheets were weighed and added to the above reducing agent $NaHSO_3$ solution, followed by continuous stirring and ultrasonic dispersion, to obtain a suspension with uniformly suspended graphene.

Step 3: 1 mol of anhydrous $Na_2SO_4$, 1.9 mol of $FeSO_4 \cdot 7H_2O$, and 0.1 mol of $MgSO_4 \cdot 7H_2O$ were weighed and added slowly in sequence to the above suspension, followed by continuous stirring until the above sulfate raw materials were completely dissolved, resulting in a green graphene suspension.

Step 4: the above suspension was subjected to spray drying under continuous highspeed stirring. An inlet air temperature in a drying chamber of the equipment was set to 150°C, an outlet air temperature was maintained at 100°C, and a dropping rate of the suspension was 400 mL/h. After the spray drying was completed, a spray-dried precursor to be sintered was directly collected.

Step 5: the spray-dried precursor was placed in a tube furnace with a continuous flow of dry inert gas, heated to 380°C at a temperature-rise rate of 1.5 °C/min, and held at 380°C for 12 hours, resulting in a sodium-iron-sulfate-based carbon composite material of the aforementioned chemical formula type.

[Battery preparation]

A film formed by mixing the prepared sodium-iron-sulfate-based carbon composite material, the polyvinylidene fluoride (PVDF), and the conductive carbon (in a mass ratio: 8:1:1) was used as a cathode, metallic sodium was used as a negative electrode, a glass fiber membrane was used as a separator, and a solution of $NaPF_6$ (1 mol/L) dissolved in ethylene carbonate/propylene carbonate (at a molar ratio: 1:1) was used as an electrolyte. These components were assembled into an R2032-type button cell case to form a sodium-ion battery.

For the sodium-ion batteries containing the cathode active material in Examples 2 to 10 and Comparative Examples 1 to 4, except for different parameters (see Table 1 for details), all other conditions were the same as in Example 1. Chemical formulas of the obtained cathode active materials are shown in Table 2.

[Table 1]

|  | Example 1 | Example 2 | Example 3 | Example 4 | Example 5 | Example 6 |
|---|---|---|---|---|---|---|
| Step 1 |  |  |  |  |  |  |
| Reducing agent | $NaHSO_3$ | $Na_2S_2O_5$ | $Na_2S_2O_5$ | $NaHSO_3$ | $NaHSO_3$ | $Na_2S_2O_3$ |

(continued)

| | | Example 1 | Example 2 | Example 3 | Example 4 | Example 5 | Example 6 |
|---|---|---|---|---|---|---|---|
| | Step 1 | | | | | | |
| | Amount of added reducing agent (mol) | 0.04 | 0.02 | 0.03 | 0.04 | 0.02 | 0.01 |
| | Deionized water (mL) | 1200 | 1200 | 1200 | 1300 | 1500 | 1100 |
| | Step 2 | | | | | | |
| | Inorganic conductive carbon material | Graphene nanosheets | Carbon nanotubes | Graphene and acetylene black | Mesoporous carbon | Reduced graphene oxide | Ketjen black |
| | Amount of added inorganic conductive carbon material (g) | 20 | 30 | 5+10 | 25 | 20 | 10 |
| | Step 3 | | | | | | |
| | Amount of added anhydrous $Na_2SO_4$ (mol) | 1 | 1.2 | 1.2 | 1.1 | 1.3 | 0.96 |
| | Amount of added $FeSO_4 \cdot 7H_2O$ (mol) | 1.9 | 1.8 | 1.8 | 1.8 | 1.9 | 1.8 |
| | Sulfate | $MgSO_4 \cdot 7H_2O$ | $MgSO_4 \cdot 7H_2O$ $NiSO_4 \cdot 6H_2O$ | $MnSO_4 \cdot 4H_2O$ | $MnSO_4 \cdot 4H_2O$ $MgSO_4 \cdot 7H_2O$ $ZnSO_4 \cdot 7H_2O$ $CoSO_4 \cdot 7H_2O$ | $CuSO_4 \cdot 5H_2O$ | $MgSO_4 \cdot 7H_2O$ |
| | Amount of added sulfate (mol) | 0.1 | 0.1+0.1 | 0.2 | 0.05+ 0.05+ *0.05*+ 0.05 | 0.1 | 0.2 |
| | Step 4 | | | | | | |
| | Inlet air temperature (°C) | 150 | 150 | 145 | 150 | 130 | 160 |
| | Outlet air temperature (°C) | 100 | 105 | 95 | 100 | 90 | 80 |
| | Step 5 | | | | | | |
| | Sintering temperature (°C) | 380 | 350 | 360 | 350 | 320 | 300 |
| | Time (h) | 12 | 18 | 15 | 18 | 8 | 20 |

[Table 1 (Continued)]

|  | Example 7 | Example 8 | Example 9 | Example 10 | Comparative Example 1 |
|---|---|---|---|---|---|
| Step 1 |  |  |  |  |  |
| Reducing agent | $NaHSO_3$ | $NaHSO_3$ | $NaHBO_3$ | $NaHSO_3$ | $NaHSO_3$ |
| Amount of added reducing agent (mol) | 0.04 | 0.04 | 0.04 | 0.04 | 0.04 |
| Deionized water (mL) | 1200 | 1200 | 1200 | 1200 | 1200 |
| Step 2 |  |  |  |  |  |
| Inorganic conductive carbon material | Graphene nanosheets | Graphene nanosheets | Graphene nanosheets | Graphene nanosheets | Graphene nanosheets |
| Amount of added inorganic conductive carbon material (g) | 20 | 20 | 20 | 20 | 20 |
| Step 3 |  |  |  |  |  |
| Amount of added anhydrous $Na_2SO_4$ (mol) | 1 | 1 | 1 | 1 | 1 |
| Amount of added $FeSO_4 \cdot 7H_2O$ (mol) | 1.9 | 1.9 | 1.9 | 2 | 1.9 |
| Sulfate | $MgSO_4 \cdot 7H_2O$ | $MgSO_4 \cdot 7H_2O$ | $MgSO_4 \cdot 7H_2O$ | / | $MgSO_4 \cdot 7H_2O$ |
| Amount of added sulfate (mol) | 0.1 | 0.1 | 0.1 | / | 0.1 |
| Step 4 |  |  |  |  |  |
| Inlet air temperature (°C) | 165 | 120 | 150 | 150 | 150 |
| Outlet air temperature (°C) | 120 | 90 | 105 | 105 | 100 |
| Step 5 |  |  |  |  |  |
| Sintering temperature (°C) | 380 | 380 | 280 | 380 | 400 |
| Time (h) | 12 | 12 | 12 | 12 | 12 |

[Table 1 (Continued)]

|  | Comparative Example 2 | Comparative Example 3 | Comparative Example 4 |
|---|---|---|---|
| Step 1 |  |  |  |
| Reducing agent | / | / | $NaHSO_3$ |
| Amount of added reducing agent (mol) | / | / | 0.16 |
| Deionized water (mL) | 1200 | 1200 | 1200 |
| Step 2 |  |  |  |
| Inorganic conductive carbon material | Graphene nanosheets | Carbon nanotubes | Graphene nanosheets |
| Amount of added inorganic conductive carbon material (g) | 20 | 20 | 20 |
| Step 3 |  |  |  |
| Amount of added anhydrous $Na_2SO_4$ (mol) | 1 | 1.2 | 1 |
| Amount of added $FeSO_4 \cdot 7H_2O$ (mol) | 1.9 | 1.9 | 1.9 |

(continued)

|  | Step 3 | | | |
| --- | --- | --- | --- | --- |
|  | Sulfate | $MgSO_4 \cdot 7H_2O$ | $MnSO_4 \cdot 4H_2O$ | $MgSO_4 \cdot TH_2O$ |
|  | Amount of added sulfate (mol) | 0.1 | 0.1 | 0.1 |
|  | Step 4 | | | |
|  | Inlet air temperature (°C) | 150 | 160 | 150 |
|  | Outlet air temperature (°C) | 105 | 105 | 105 |
|  | Step 5 | | | |
|  | Sintering temperature (°C) | 380 | 330 | 380 |
|  | Time (h) | 12 | 15 | 12 |
| In Table 1, "/" indicates that the corresponding component is not added. | | | | |

[Table 2]

|  | Composition |
| --- | --- |
| Example 1 | $Na_{2.04}Fe_{1.9}Mg_{0.1}(SO_4)_{3.02-z}(SO_3)_z@C$ |
| Example 2 | $Na_{2.44}Fe_{1.8}Ni_{0.1}Zn_{0.1}(SO_4)_{3.22-z}(SO_3)_z@C$ |
| Example 3 | $Na_{2.66}Fe_{1.8}Mn_{0.2}(SO_4)_{3.33-z}(SO_3)_z@C$ |
| Example 4 | $Na_{2.24}Fe_{1.8}Mn_{0.05}Mg_{0.05}Zn_{0.05}Co_{0.05}(SO_4)_{3.12-z}(SO_3)_z@C$ |
| Example 5 | $Na_{2.62}Fe_{1.9}Cu_{0.1}(SO_4)_{3.31-z}(SO_3)_z@C$ |
| Example 6 | $Na_{1.94}Fe_{1.8}Mg_{0.2}(SO_4)_{2.97-z}(SO_3)_z@C$ |
| Example 7 | $Na_{2.04}Fe_{1.9}Mg_{0.1}(SO_4)_{3.02-z}(SO_3)_z@C$ |
| Example 8 | $Na_{2.04}Fe_{1.9}Mg_{0.1}(SO_4)_{3.02-z}(SO_3)_z@C$ |
| Example 9 | $Na_{2.04}Fe_{1.9}Mg_{0.1}(SO_4)_{3.02-z}(SO_3)_z@C$ |
| Example 10 | $Na_{2.04}Fe_2(SO_4)_{3.02-z}(SO_3)_z@C$ |
| Comparative Example 1 | $Na_{2.04}Fe_{1.9}Mg_{0.1}(SO_4)_{3.02-z}(SO_3)_z@C$ |
| Comparative Example 2 | $Na_2Fe_{1.9}Mg_{0.1}(SO_4)_3@C$ |
| Comparative Example 3 | $Na_{2.4}Fe_{1.9}Mn_{0.1}(SO_4)_{3.2}@C$ |
| Comparative Example 4 | $Na_{2.16}Fe_{1.9}Mg_{0.1}(SO_4)_{3.08-z}(SO_3)_z@C$ |

Testing and analysis

1. Physicochemical analysis was conducted on the cathode active materials of Examples 1 to 10 and Comparative Examples 1 to 4, with test results shown in Table 3.

(1) Physicochemical indexes of the cathode active materials were determined by observing the morphology of prepared samples using a scanning electron microscope.
(2) Thermogravimetric analysis was used to characterize carbon contents of the samples.
(3) A laser particle size analyzer with a dry testing process was employed to measure an average particle size $D_{50}$ and a maximum particle size $D_{100}$ of the samples.
(4) An X-ray diffractometer was used to obtain XRD patterns of the materials, to analyze crystal structures and characteristic peak intensities of the samples.
(5) Specific surface areas of the samples were tested using a specific surface area analyzer, and $Fe^{3+}$ contents in the samples were determined by potassium dichromate ($K_2Cr_2O_7$) titration (in accordance with GB/T 33828-2017).

2. Electrochemical performance of the lithium-ion batteries containing the cathode active material of Examples 1 to 10 and Comparative Examples 1 to 4 was tested. Constant current charge-discharge tests were performed within a voltage range of 2.0 V to 4.5 V at current densities of 0.1C and 1C (1C=100 mAh/g) to obtain specific capacities and cycling performance of the materials. Test results are shown in Table 3.

[Table 3]

| | C content (wt.%) | $Fe^{3+}$ content (wt.%) | $D_{50}$ | $D_{100}$ | Specific surface area ($m^2$/g) | $I_1/I_2$ | $I_{1'}/I_{2'}$ | $\Delta I_1/I_2$ (%) | Discharge specific capacity at 0.1C (mAh/g) | Retention rate of 80 cycles at 1C (%) |
|---|---|---|---|---|---|---|---|---|---|---|
| Example 1 | 5.4 | 0.65 | 8.2 | 18.2 | 15.5 | 1.25 | 1.21 | 3.2 | 93.7 | 97.5 |
| Example 2 | 8.1 | 0.78 | 6.5 | 15.4 | 18.9 | 1.24 | 1.19 | 4.0 | 92.5 | 97.8 |
| Example 3 | 4.2 | 0.86 | 7.2 | 16.9 | 13.2 | 1.22 | 1.18 | 3.3 | 91.9 | 96.9 |
| Example 4 | 6.2 | 0.75 | 8.9 | 19.0 | 18.2 | 1.22 | 1.18 | 3.3 | 91.5 | 98.2 |
| Example 5 | 5.2 | 0.67 | 7.3 | 18.3 | 15.3 | 1.24 | 1.20 | 3.2 | 91.4 | 98.1 |
| Example 6 | 3.4 | 0.81 | 6.4 | 17.2 | 9.6 | 1.22 | 1.18 | 3.3 | 91.5 | 98.7 |
| Example 7 | 4.9 | 1.31 | 7.8 | 23.1 | 22.2 | 1.11 | 1.06 | 4.5 | Gelation phenomenon occurred during slurry preparation | |
| Example 8 | 5.3 | 0.70 | 8.4 | 17.9 | 15.2 | 1.25 | 1.21 | 3.2 | 92.1 | 96.7 |
| Example 9 | 4.6 | 0.58 | 7.9 | 17.6 | 14.8 | 1.28 | 1.25 | 2.3 | 84.4 | 92.5 |
| Example 10 | 5.2 | 1.83 | 7.9 | 18.1 | 15.2 | 1.20 | 1.11 | 7.5 | 88.5 | 94.2 |
| Comparative Example 1 | 3.2 | 2.68 | 7.9 | 16.7 | 11.3 | 0.84 | 0.79 | 6.0 | 79.2 | 97.2 |
| Comparative Example 2 | 3.1 | 2.72 | 8.0 | 17.9 | 14.5 | 0.85 | 0.77 | 9.4 | 80.3 | 93.5 |
| Comparative Example 3 | 5.1 | 1.21 | 7.8 | 18.4 | *15.5* | 1.09 | 1.04 | 4.6 | 78.3 | 92.3 |
| Comparative Example 4 | 5.6 | 0.59 | 7.8 | 17.6 | 14.9 | 1.20 | 1.17 | 2.5 | 81.3 | 98.2 |

Result analysis:

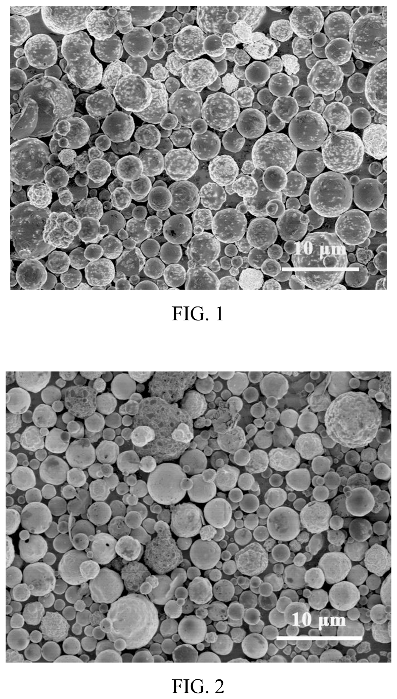

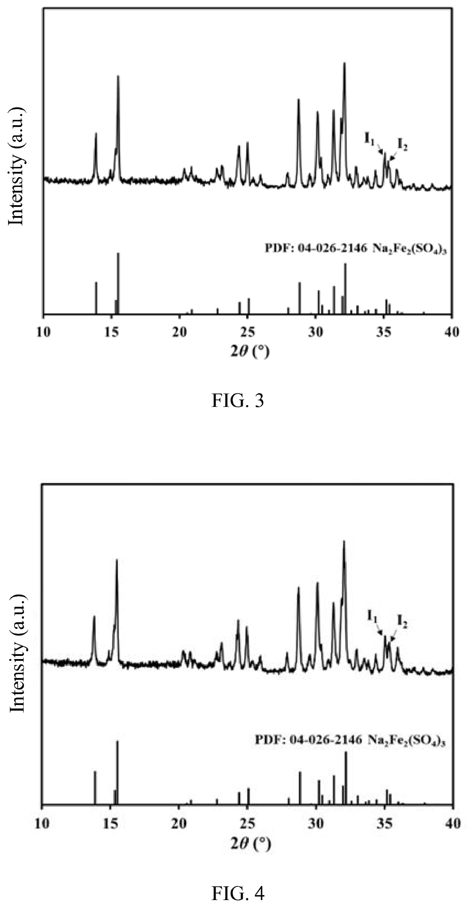

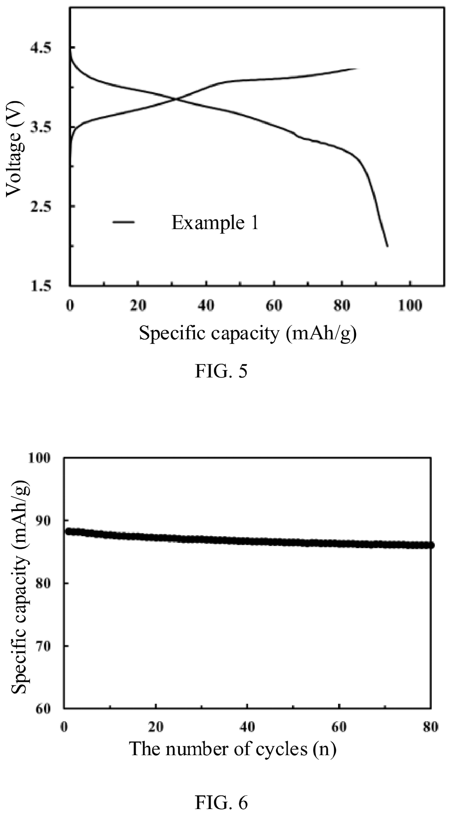

The cathode active material in Example 1 was prepared by the method provided by the present disclosure. FIG. 1 is an SEM image of the spray-dried precursor obtained in Example 1, and FIG. 2 is an SEM image of the cathode active material. FIG. 3 is a corresponding XRD pattern. FIG. 4 is an XRD pattern of the material that had been left to stand for 24 hours in an open system. Meanwhile, in combination with data in Table 3 ($I_1/I_2$, $I_{1'}/I_{2'}$, $\Delta I_1/I_2$), it can be known that Fe in the cathode active material existed mainly in the form of $Fe^{2+}$, which can remain unoxidized for a long storage time and maintain structural stability. The electrochemical performances of the batteries containing such a material is shown in Table 3 and FIG. 5 and FIG. 6, indicating that such a cathode active material can improve the specific capacity and the cycling stability of the battery. Similarly, Examples 2 to 10 also have the above advantages.

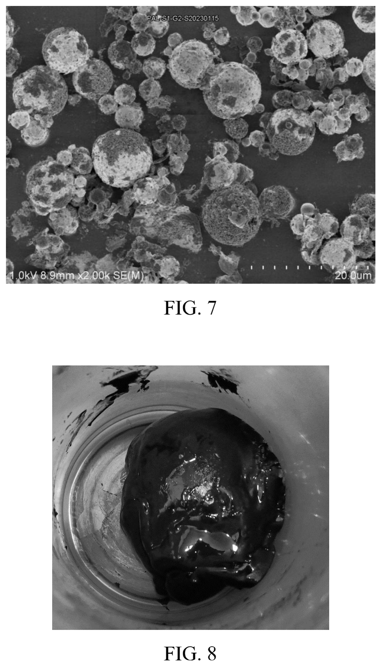

In addition, as illustrated in FIG. 7, compared with Example 1, the inlet air temperature in the Example 7 was increased, resulting in a specific surface area of 22.2 $m^2$/g. Compared with Example 1, the prepared cathode active material of Example 7 had obvious pores on a particle surface, which may be caused by rapid dehydration, with $D_{50}$ of 7.8 $\mu$m and the maximum particle size $D_{100}$ of 23.1 $\mu$m, which were both larger than those of Example 1. Due to the larger particle size, the high specific surface area, and irregular morphology, the material of Example 7 exhibited a significant gelation phenomenon during preparation of an electrode plate slurry due to its water-absorbing property, which affected the electrochemical performance of the material to some extent. A state of gelation is illustrated in FIG. 8.

Compared with Example 1, a sintering temperature in Step 5 of Comparative Example 1 was increased. The results indicate that the cathode active material of Comparative Example 1 contained a relatively high content of $Fe^{3+}$, indicating the failure of inhibiting the occurrence of a side reaction of ferrous phosphate.

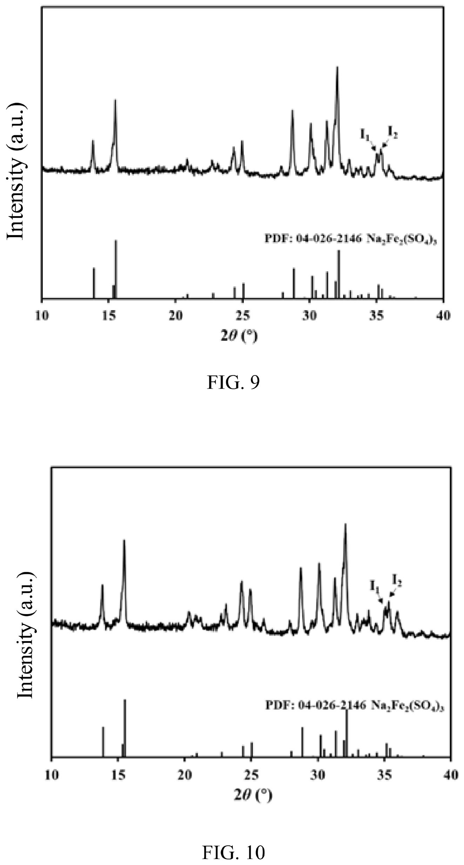

Compared with Example 1, no reducing agent was added in Comparative Example 2. In combination with its XRD pattern (FIG. 9), $I_1/I_2$=0.85, indicating that the material components contained a large amount of $Fe_3O_4$ impurities containing $Fe^{3+}$. The reason lies in that a relatively severe decomposition side reaction of $Fe_2SO_4$ occurred and a large amount of $Fe_3O_4$ impurities was produced due to the absence of the reducing agent under a relatively high sintering temperature of 380°C. The material of Comparative Example 2 had a discharge specific capacity at 0.1C of only 80.3 mAh/g and a capacity retention rate at 1C of 93.5%. Without the protection of the reducing agent, the electrochemical performance was significantly affected. As illustrated in the XRD pattern (FIG. 10) of the material after standing, other impurity phases appeared in the material after the standing, indicating poor storage performance of the material.

In Comparative Example 3, no reducing agent was added either, but the sintering temperature was reduced, which reduced the oxidation of $Fe^{2+}$ to some extent. However, a solid solution reaction of a material sintered at a low temperature was incomplete, and a small amount of crystal water remained. The battery containing the material of Comparative Example 3 had a discharge specific capacity of only 78.3 mAh/g. Moreover, after charge-discharge of 80 cycles at 1C, the capacity retention rate was only 92.3%. In addition, $\Delta I_1/I_2$ reached 8.5% after placement under the same conditions, indicating poor storage performance of the material in the absence of the reducing agent.

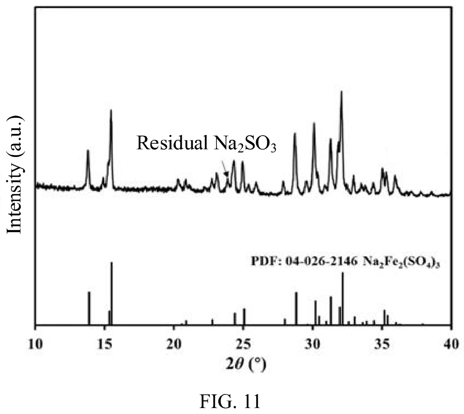

Compared with Example 1, the amount of the added reducing agent in Comparative Example 4 was increased. Due to the excessive amount of the added reducing agent, the part of the reducing agent consumed under $N_2$ sintering conditions was relatively low, resulting in obvious an $Na_2SO_3$ impurity phases in the XRD pattern (FIG. 11), which had an adverse effect on the electrochemical performance of the sample, with a discharge specific capacity at 0.1C of only 81.3 mAh/g.

In the specification, descriptions with reference to the terms "an embodiment", "some embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. In addition, those skilled in the art can combine the different embodiments or examples and the features of the different embodiments or examples described in this specification without contradicting each other.

Although embodiments according to the present disclosure have been shown and described, it would be appreciated by those skilled in the art that the above embodiments are illustrative and cannot be construed to limitation on the present disclosure, and changes, alternatives, modifications, and variations can be made in the embodiments without departing from scope of the present disclosure.

**Claims**

1. A cathode active material, wherein the cathode active material is an iron-based sulfate cathode material for a sodium-ion battery, an X-ray diffraction pattern of the cathode active material having a first characteristic peak in a range from 34.9° to 35.3° and a second characteristic peak in a range from 35.3° to 35.5°,
   wherein a peak intensity $I_1$ of the first characteristic peak and a peak intensity $I_2$ of the second characteristic peak satisfy: $1.1 \leq I_1/I_2 \leq 1.5$.

2. The cathode active material according to claim 1, wherein for the cathode active material that has been left to stand for 24 hours in an open environment at a temperature of 25°C and a relative humidity of 30%, a peak intensity $I_{1'}$ of the first characteristic peak and a peak intensity $I_{2'}$ of the second characteristic peak satisfy:

$$1.05 \leq I_{1'}/I_{2'} \leq 1.4;$$

and

$$0 \leq \Delta I_1/I_2 = \frac{I_1/I_2 - I_{1'}/I_{2'}}{I_1/I_2} \leq 6\%.$$

3. The cathode active material according to claim 2, wherein the peak intensity $I_1$ of the first characteristic peak and the peak intensity $I_2$ of the second characteristic peak satisfy:

$$1.2 \leq I_1/I_2 \leq 1.4.$$

4. The cathode active material according to claim 2, wherein the peak intensity $I_1$ of the first characteristic peak and the peak intensity $I_2$ of the second characteristic peak satisfy:

$$1.1 \leq I_{1'}/I_{2'} \leq 1.25;$$

and

$$0 \leq \Delta I_1/I_2 = \frac{I_1/I_2 - I_{1'}/I_{2'}}{I_1/I_2} \leq 4\% \ .$$

5. The cathode active material according to claim 1, wherein the cathode active material satisfies at least one of the following conditions:

   $D_{50}$ of the cathode active material ranges from 4 $\mu$m to 10 $\mu$m;
   $D_{100}$ of the cathode active material satisfies: 6 $\mu$m$<D_{100}<20$ $\mu$m; or
   a specific surface area of the cathode active material ranges from 5 m$^2$/g to 25 m$^2$/g.

6. The cathode active material according to any one of claims 1 to 5, wherein the cathode active material has a chemical formula represented by formula (1):

   $$Na_{2x}Fe_{2-y}M_y(SO_4)_{(2+x-z)}(SO_3)_z@C \qquad (1),$$

   where:

   $$1 \leq x \leq 2.04,$$

   and preferably $1 \leq x \leq 1.4$;

   $$0 \leq y \leq 0.2;$$

   $$0 < z \leq 0.04,$$

   and preferably $0 < z \leq 0.03$; and
   M is selected from at least one of Mn, Co, Ni, Mg, Cu, or Zn.

7. A preparation method for a cathode active material, the preparation method comprising:

   step 1 of preparing a reducing agent solution and mixing an inorganic conductive carbon material with the reducing agent solution to obtain a mixed solution 1;
   step 2 of mixing $Na_2SO_4$, $FeSO_4 \cdot 7H_2O$, and optional sulfate with the mixed solution 1 to obtain a mixed solution 2;
   step 3 of performing spray drying on the mixed solution 2 to obtain a cathode active material precursor; and
   step 4 of sintering the cathode active material precursor to obtain the cathode active material,
   wherein a reducing agent in the reducing agent solution is $NaHSO_3$ and/or $Na_2S_2O_5$; and
   wherein the sulfate is used to provide element M, the element M being selected from at least one of Mn, Co, Ni, Mg, Cu, or Zn.

8. The preparation method according to claim 7, wherein in step 1, a mass of a solvent in the reducing agent solution is 2 to 3 times a mass of $FeSO_4 \cdot 7H_2O$ added in step 2.

9. The preparation method according to claim 7, wherein in step 1, the inorganic conductive carbon material comprises at least one of graphene, reduced graphene oxide, conductive graphite, acetylene black, Ketjen black, mesoporous carbon, or carbon nanotubes.

10. The preparation method according to claim 7, wherein in step 2, a molar ratio of $Na_2SO_4$, $FeSO_4 \cdot 7H_2O$, and the sulfate is $\delta$:2-y:y,
where $0.96 \leq \delta \leq 2$; and $0 \leq y \leq 0.2$.

11. The preparation method according to claim 10, wherein a molar ratio of sodium element in the reducing agent to $Na_2SO_4$ is $2n$:$\delta$,
where $0 < n \leq 0.04$.

12. The preparation method according to claim 7, wherein in step 2, a mass ratio of a total mass of $Na_2SO_4$, $FeSO_4 \cdot 7H_2O$, and the sulfate that are completely dehydrated to a mass of the inorganic conductive carbon material is 100:(0.5 to 10).

13. The preparation method according to claim 7, wherein in step 3, conditions of the spray drying comprise:
an inlet air temperature ranging from 130°C to 160°C, and an outlet air temperature greater than or equal to 80°C.

14. The preparation method according to claim 7, wherein in step 3:

$D_{50}$ of the cathode active material precursor ranges from 4 $\mu$m to 10 $\mu$m; and
$D_{100}$ of the cathode active material precursor satisfies: 6 $\mu$m<$D_{100}$<20 $\mu$m.

15. The preparation method according to claim 7, wherein in step 4, said sintering is performed at 300°C to 380°C for 8 hours to 20 hours.

16. A cathode plate, comprising:

the cathode active material according to any one of claims 1 to 6; or
the cathode active material prepared by the preparation method according to any one of claims 7 to 15.

17. A battery, comprising the cathode plate according to claim 16.

18. An electric device, comprising the battery according to claim 17.

FIG. 1

FIG. 2

FIG. 3

FIG. 4

FIG. 5

FIG. 6

FIG. 7

FIG. 8

FIG. 9

FIG. 10

Residual Na$_2$SO$_3$

PDF: 04-026-2146 Na$_2$Fe$_2$(SO$_4$)$_3$

FIG. 11

## INTERNATIONAL SEARCH REPORT

| International application No. |
|---|
| **PCT/CN2024/102604** |

**A.     CLASSIFICATION OF SUBJECT MATTER**

H01M4/62(2006.01)i；  H01M4/136(2010.01)i；  H01M10/054(2010.01)i；  C01G49/00(2006.01)i；  H01M 4/58(2010.01)i

According to International Patent Classification (IPC) or to both national classification and IPC

**B.     FIELDS SEARCHED**

Minimum documentation searched (classification system followed by classification symbols)

IPC/CPC：  H01M4/-,  H01M10/-,  C01G49/-

Documentation searched other than minimum documentation to the extent that such documents are included in the fields searched

Electronic data base consulted during the international search (name of data base and, where practicable, search terms used)

CNTXT, 中国期刊网全文数据库, CJFD, WPABS, DWPI, ENTXT, ENTXTC, ISI-Web of Science: 正极, 硫酸铁钠, 硫酸亚铁钠, 亚硫酸氢钠, 焦亚硫酸钠, 硫酸钠, 硫酸亚铁, 衍射峰, 峰强, XRD, positive electrode, NaHSO3, Na2S2O5, NaSO4, Na2Fe(SO4)2, FeSO4, Mg, Mn, Cu, Zn, Ni, Co, Fe2+

**C.     DOCUMENTS CONSIDERED TO BE RELEVANT**

| Category* | Citation of document, with indication, where appropriate, of the relevant passages | Relevant to claim No. |
|---|---|---|
| X | CN 116404144 A (HUADA SODIUM ELECTRONICS (BEIJING) TECHNOLOGY CO., LTD.) 07 July 2023 (2023-07-07)<br>description, paragraphs 0027, 0054, and 0058-0063, and figure 2 | 1-5, 7-18 |
| Y | CN 116404144 A (HUADA SODIUM ELECTRONICS (BEIJING) TECHNOLOGY CO., LTD.) 07 July 2023 (2023-07-07)<br>description, paragraphs 0027, 0054, and 0058-0063, and figure 2 | 6-18 |
| Y | CN 117239138 A (NORTH CHINA ELECTRIC POWER UNIVERSITY) 15 December 2023 (2023-12-15)<br>description, paragraphs 0005 and 0012-0014 | 6-18 |
| A | CN 117727883 A (ZHENGZHOU UNIVERSITY) 19 March 2024 (2024-03-19)<br>entire document | 1-18 |
| A | CN 116995227 A (MEINA (WUXI) ENERGY TECHNOLOGY CO., LTD. et al.) 03 November 2023 (2023-11-03)<br>entire document | 1-18 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 December 2024** | **08 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/102604** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 117832453 A (ZHENGZHOU UNIVERSITY) 05 April 2024 (2024-04-05)<br>entire document | 1-18 |
| A | US 2022123303 A1 (CONTEMPORARY AMPEREX TECHNOLOGY CO., LTD.) 21 April 2022 (2022-04-21)<br>entire document | 1-18 |

Form PCT/ISA/210 (second sheet) (July 2022)

**INTERNATIONAL SEARCH REPORT**
Information on patent family members

International application No.

**PCT/CN2024/102604**

| Patent document cited in search report | | | Publication date (day/month/year) | Patent family member(s) | | | Publication date (day/month/year) |
|---|---|---|---|---|---|---|---|
| CN | 116404144 | A | 07 July 2023 | None | | | |
| CN | 117239138 | A | 15 December 2023 | None | | | |
| CN | 117727883 | A | 19 March 2024 | None | | | |
| CN | 116995227 | A | 03 November 2023 | None | | | |
| CN | 117832453 | A | 05 April 2024 | None | | | |
| US | 2022123303 | A1 | 21 April 2022 | EP | 3968410 | A1 | 16 March 2022 |
| | | | | EP | 3968410 | A4 | 17 August 2022 |
| | | | | WO | 2021036791 | A1 | 04 March 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410544773X

- GB 338282017 T

**Non-patent literature cited in the description**

- **LI et al.** *J. Mater. Chem. A*, 2019, vol. 7, 14656-14669

- *J. Mater. Chem. A*, 2019, vol. 7, 8226-8233